# EUROPEAN PATENT APPLICATION

(11) **EP 2 693 382 A2**
(43) Date of publication of application: **05.02.2014**
(21) Application number: 13178606.3
(22) Date of filing: 30.07.2013
(51) Int. Cl.: G06Q 10/10, G06F 3/0488

(54) **Scalable zoom calendars**

(30) Priority: 30.07.2012 US 201213562116
(71) Applicant: SAP AG, 69190 Walldorf (DE)
(72) Inventor: Abdukalykov, Rolan, 69190 Walldorf (DE); El-Jayousi, Mohannad, 69190 Walldorf (DE); Gauthier, Alain, 69190 Walldorf (DE); Ghorayeb, Roy, 69190 Walldorf (DE); Lavoie, Vincent, 69190 Walldorf (DE); Liang, Xuebo, 69190 Walldorf (DE)
(74) Representative: Richardt Patentanwälte GbR

(57) **Abstract**

Calendar content in a linear timeline may dynamically zoomed into and out of according to a change of a distance separating two user selected points on the screen as at least one of the user selected points is moved by the user. As the user zooms into and out of the timeline, a timescale that is displayed as part of the timeline may also be updated. The entries that are shown in the timeline may also be updated so that they correspond to the selected zoomed in time period. Additional detailed information may be displayed when zooming into the timeline whereas less information may be displayed when zooming out of the timeline. The degree of zooming may depend on a change in the separation distance between the points as one of them is moved.

## Description

### BACKGROUND

Advances in computing technologies has enabled smaller devices, such as phones and tablets with touch screen interfaces, to execute more sophisticated applications. As a result, users are able to perform many of the functions on their phones and tablets that they previously performed on their computers and laptops. For example, users are able to view web pages, email, and calendar information on their phones as well as on their computers and laptops.

However, some calendar applications, such as Gantt charts, may include dense amounts of calendar entries and information. Such information is easier to view and comprehend when viewed on the larger screen sizes that are typically found on desktop monitors and laptops. The much smaller screens on phones and tablets make it difficult for a user to quickly find, navigate, and comprehend the dense information that may be included in some calendar applications on these smaller screens.

There is thus a need for more efficient techniques that enable users to quickly find, navigate, and comprehend information displayed in calendar applications on these smaller devices. Furthermore, there is a need to adapt calendar display data stored in a computing device with regard for the screen size of the computing device. In particular, there is a need to swiftly navigate a significantly larger amount of (calendar) data than can be usefully presented on the screen of a touch screen device at a single time, preferably without necessitating an external input device such as a keyboard.

### SUMMARY OF THE DISCLOSURE

To address the aforementioned needs, the present disclosure proposes a method for modifying data stored in a touch screen device and representative of a calendar.

In a first embodiment, the method comprises detecting, within a calendar region displayed on a touch screen of the touch screen device by a calendar application executing on the touch screen device, a first point touched by a first user finger on a touch screen and a second point touched by a second user finger on the touch screen, detecting a first dragging operation on the touch screen by the first and second user fingers relative to the first and second points, detecting a third point touched by the first user finger on the touch screen at a conclusion of the first dragging operation and a fourth point touched by the second user finger on the touch screen at a conclusion of the first dragging operation, storing, in the touch screen device, first touch point data indicative of a location of the first point on the touch screen, second touch point data indicative of a location of the second point on the touch screen, third touch point data indicative of a location of the third point on the touch screen and fourth touch point data indicative of a location of the fourth point on the touch screen, calculating, using the first, second, third and fourth touch point data, a first distance between the first point and the second point and a second distance between the third point and the fourth point, calculating a first scaling factor using the first distance, the second distance and one of a width of the calendar region and a width of the touch screen, calculating a second scaling factor using the first scaling factor and first timescale data of the calendar application, the first timescale data being indicative of a timescale of a first timeline displayed on the touch screen by the calendar application at a time of the first dragging operation, generating, using the second scaling factor and start time data of the calendar application indicative of a start time of the first timeline, first revised start time data, generating, using the second scaling factor and end time data of the calendar application indicative of an end time of the first timeline, first revised end time data; and refreshing the calendar region to display a first revised timeline that extends from a start time represented by the first revised start time data to an end time represented by the first revised end time data. Alternative embodiments are disclosed hereinbelow that comprise other combinations of features, in particular combinations comprising fewer features.

A timescale of the first revised timeline may differ from the timescale of the first timeline. The timescales may be selected from the group of minutes, quarter hours, half hours, hours, days, weeks, months, quarter years, half years, years, decades and centuries

The method allows a user to swiftly navigate a significantly larger amount of (calendar) data than can be usefully presented on the screen of a touch screen device at a single time, yet without necessitating an external input device such as a keyboard.

### BRIEF DESCRIPTION OF THE DRAWINGS

FIG. 1 shows an exemplary process.

FIG. 2 shows an exemplary view of a device having a touch screen displaying a calendar application.

FIG. 3 shows an exemplary zoomed in view of a calendar application.

FIG. 4 shows exemplary additional information that may displayed when a user zooms into a single calendar entry.

FIG. 5 shows an exemplary architecture.

### DETAILED DESCRIPTION

A user viewing calendar content in a linear timeline may dynamically zoom into and out of the timeline according to a change of a distance separating two user selected points on the screen as at least one of the user selected points is moved by the user. As the user zooms into and out of the timeline, a timescale that is displayed as part of the timeline may also be updated. For example, if a user zooms into a particular year of timeline showing several years worth of data in the timeline, the timescale may be updated to show fiscal quarters or calendar months instead of years. The entries that are shown in the timeline may also be updated so that they correspond to the selected zoomed in time period. A user using a touch screen device may use at least two of their fingers to select and/or move the two points on the touch screen.

In some instances, additional detailed information may be displayed for calendar entries when a user zooms into the timeline whereas aggregated, consolidated, or more general information may be displayed when the user zooms out of the timeline. In some instance, the degree of zooming may depend on the separation distance between the two user selected points as the user moves one of the points. As the separation distance changes, the calendar may be further zoomed into making it possible to zoom from displaying several years, to displaying only a few months, to only a few days, and so on by either spreading the two points further apart or moving them closer together. The reverse zoom may also be applied if the points are moved in the opposite direction by either moving them closer together or spreading them apart.

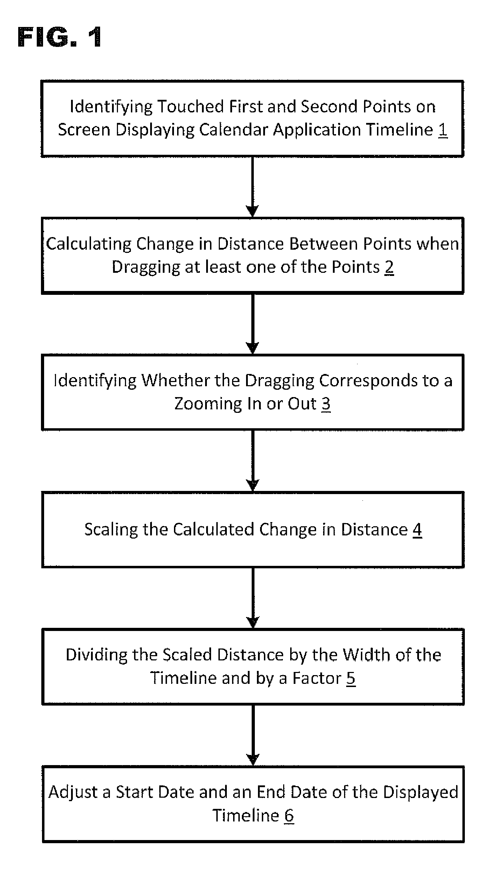

FIG. 1 shows an exemplary process. In box 1, a touched first point and second point within a calendar application displaying a timeline across a first dimension on a touch screen device may be identified. A user may touch the first and second points on a surface of the touch screen using a finger, a mouse, a touchpad, or other electronic device.

After the points are touched, at least one of the touched points may be dragged. Responsive to a dragging of at least one of the touched points, in box 2, a change in a distance between the first point and the second point may be calculated.

In box 3, an identification as to whether the dragging corresponds to a zooming in or a zooming out may be made based on the calculated distance change.

In box 4, the calculated change in distance may be scaled using a scaling factor that varies for different units of time in the calendar application. For example, different scaling factors may be used if the time in the calendar application is months instead of years or days. Thus, if a user zooms out of a timeline displaying days, the scaling factor may cause a jump to months or quarters depending on the calculated distance between the points. However, the user zooms out of a timeline displaying quarters, the scaling factor may cause a different jump to years or decades instead.

In box 5, the scaled calculated change in distance may be divided by the width of the displayed timeline and by an adjustment factor to calculate a date change amount. The scaled change in distance may be divided by the width of the timeline using the coordinates of the timeline displayed on the screen. Dividing by the timeline width may calculate a ratio of the distance that the fingers were moved in relation to the width of the displayed timeline.

The resulting number may then be divided by an adjustment factor, such as two, in order to equally or unequally adjust each side of the timeline (start and end dates). If the adjustment factor of two is used, then the start and end dates of the timeline may be adjusted equally. If other adjustment factors are used, the start and end dates may be adjusted unequally with different proportions.

In some instances, the adjustment factor may be influenced by a midpoint date that is representative of a date midway between the position of the user's fingers on the display. As the start and/or end dates are adjusted, the midpoint date and/or the area of calendar where the zoom started may be kept in focus and/or visible to the user. The distances between (i) the start date and the midpoint date, and (ii) the end date and the midpoint date may be used to calculate the magnitude of the adjustment factor.

In box 6, a start date and an end date of the displayed timeline may be adjusted by the calculated date change amount according to whether the dragging is identified as corresponding to the zooming in or the zooming out. When zooming in, the calculated date change amount may be added to the start date of the timeline and subtracted from the end date of the timeline. When zooming out, the calculated date change amount may be subtracted from the start date of the timeline and added to the end date of the timeline.

In some instances, the calculated changes to the distance between the first point and the second point as the user drags at least one of the points may be cached. Zooming into or out of the timeline and/or readjustment of the start and/or end dates of the timeline may occur only after the cached calculated change to the distance exceeds a threshold value in the positive or the negative direction.

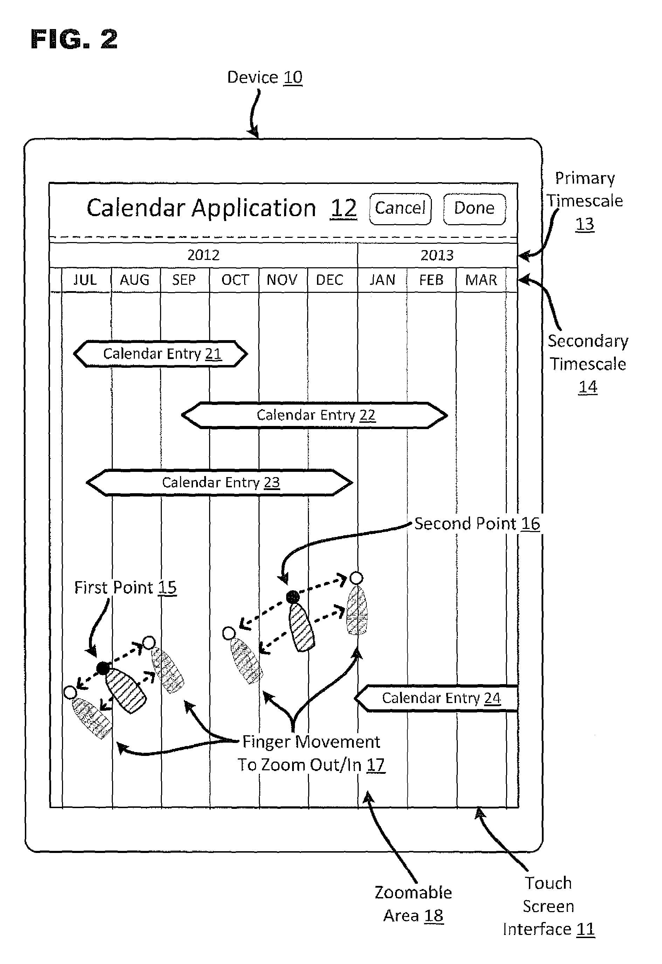

FIG. 2 shows an exemplary view of a device 10 having a touch screen displaying a calendar application 12. The touch screen device 10 may include a touch screen interface 11 that enables the use of the display screen as a touch sensitive surface.

The calendar application 12 may show a horizontal timeline with a primary timescale 13 and a secondary timescale 14. The calendar application 12 may include a zoomable area 18 which may encompass the whole timeline or parts of the timeline where the user may use their fingers 17 or other objects to zoom in or out of the timeline. The calendar application 12 may also display calendar entries 21 to 24 that fall within the time periods displayed in the timeline.

A user may zoom in or out of the timeline by initially selecting first 15 and second 16 points on the timeline with their fingers or another object. The user may then drag one or more of their fingers to change the distance between the first point 15 and the second point 16. The change in the distance separating the two points may determine whether to zoom in or out of the timeline and by what amount

For example, in some instances the finger dragging may be associated with zooming in when the calculated distance between the two touched points increases. The dragging may also be associated with zooming out when the calculated distance change between the touched points decreases. The distance between the two points may be calculated from a projection of the finger positions on the touch screen onto a horizontal axis or other axis parallel with the timeline.

In other instances, the finger dragging may be associated with zooming in when the calculated distance change between the touched points decreases. The dragging may also be associated with zooming out when the calculated distance change between the touched points increases.

In some instances, a direction of the dragging of the at least one point may be identified. Different actions may be taken depending on the direction that the at least one point is being dragged. For example, if the at least one point is dragged in a vertical direction, then a width of at least one calendar entry displayed in the timeline may be changed. However, if the at least one point is dragged in a horizontal direction, then the start date and the end date of the displayed timeline may be adjusted and the timescale shown in the timeline may be changed. In other situations, the reverse may occur or a different action may be taken if the at least one point is dragged at angle that is neither horizontal nor vertical. For example, at a non-horizontal and non-vertical angle, the dragging may cause both the width of at least one calendar entry to be increased and the start date and end date of the displayed timeline to be adjusted accordingly. A cosine angle or other angle may be used to calculate the separation of the two points at an angled direction. On the other hand, the vertical zoom can be used to increase the width of the entities displayed on the calendar. Different directional zooms, such as the vertical zoom, may be also be blocked or otherwise disabled in different instances depending on the application and any particular business requirements.

In some instances, when a user attempts to zoom in or zoom out of the timeline, the time period at the center of the timeline may remain stationary while the dates around the center change. In the example shown in FIG. 2, the middle of November 2012 appears as located in the center of the timeline. In instances where the center of the timeline remains stationary, it need not matter where on the screen a user selects the first point 15 and the second point 16 and drags one of the points, as the center of the zoomed in or zoomed out timeline may remain at the middle of November 2012.

In other instances, zooming in and out may be dynamic based on the position of the first point 15 and/or the second point 16. For example, if the first point 15 is selected in the middle of August 2012 on the screen and the second point 16 is selected in the middle of September 2012 then a zooming in may result in a zooming in on the period between the middle of August 2012 and the middle of September 2012 in the timeline.

Thus, in some instances, a midpoint date displayed in the timeline that is associated with the first 15 and second 16 touched points may be identified. The timeline may then be zoomed around the identified midpoint date when zooming into or out of the timeline.

In some instances, the timeline may have a fixed earliest start date and/or a fixed latest end date. If an attempt is made to zoom out beyond these dates, the timeline may be readjusted so that it does not exceed these fixed dates. A minimum time period may also be specified to prevent the timeline from displaying a finer granularity time period than the minimum time period in order to prevent a user from attempting to zoom in too much.

In some instances, whenever the timeline is readjusted, the calendar entries and/or other content associated with the timeline may also be reassessed for display in the timeline. For example, the entries may be resized according to the zoom level and/or a different number of entries may be displayed to make the entries more readable and/or selectable by an end user.

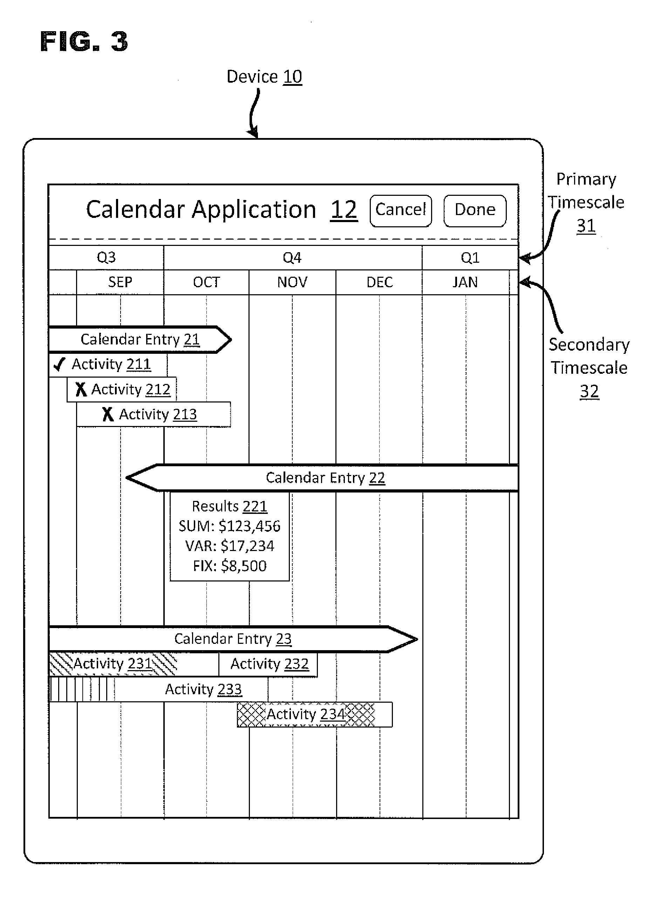

FIG. 3 shows an exemplary zoomed in view of calendar application 12. The zoomed in view may be generated in response to the user dragging at least one of the points in the FIG. 2 to zoom into the timeline. The view in FIG. 2 shows the timeline from the end of June 2012 to the beginning of April 2013, whereas the zoomed in view in FIG. 3 shows the timeline from the end of August 2012 to the beginning on February 2013.

In some instances, when zooming into or out of the timeline, a timescale shown in the timeline displayed across a first dimension may be changed based on the adjusted start and end dates of the timeline. For example, in FIG. 2 the primary timescale 13 displayed years, whereas the primary timescale 31 in FIG. 3 displayed quarters instead of years.

In some instances, the timescale shown in the timeline may be a multidimensional timescale including a primary timescale 13 and 31 and a secondary timescale 14 and 32. The secondary timescale 14 and 32 may have a unit of time that is a subset of the primary timescale 13 and 31. When a multidimensional timescale is changed, at least one of the primary timescale 13 and 31 and the secondary timescale 14 and 32 may be changed accordingly. For example, the primary timescale 31 may be fiscal quarters and the secondary timescale 32 may be months. When zooming out of this calendar application 15 view, the primary timescale may change from fiscal quarters 31 to years 13, as shown when zooming out of FIG. 3 to return to the view of FIG. 2.

In some instances, the secondary timescale may be changed between different time units, such as from months to quarters. In other instances, the secondary timescale may continue to show the same time unit, such as months 14 and 32, though the space allocated for time unit may be changed, such as the space allocated for each month on the screen being reduced when zooming out from FIG. 3 to FIG. 2 and the space being increased when zooming in from FIG. 2 to FIG. 3.

In some instances, when zooming into or out of the calendar application 12, the information about one or more of the calendar entries displayed on the screen may also change. For example, in response to a user zooming into the timeline, additional information associated with each calendar entry may be displayed on the screen. This additional information may be displayed for those calendar entries that are within the adjusted start date and the adjusted end date of the timeline from the zooming in.

The additional information that is displayed may include any information about the activities, tasks, or events associated with a respective calendar entry. In some situations the displayed additional information may include one or more sub-activity completion status bars 211 to 213. These status bars 211 to 213 may list one or more activities associated with a calendar entry 21 and show a status of the activity, for example, with a check mark or cross, so that a user can quickly identify a status of each activity. As the user further zooms into the calendar application 12, further information about each activity may be displayed, such as sub-activities status bars for each sub-activity associated with an activity. In some instances, the sub-activity status bars may be positioned in the calendar application 12 so that they are aligned with a start, end or other date associated with the activity.

In some situations, the displayed additional information may include statistical information 221 about a respective calendar entry. The statistical information 221 may, but need not, be limited to data included between the adjusted start date and the adjusted end date of the timeline as shown in the zoomed in timeline. The statistical information 221 may include a function, such as a sum, variance, or other function, that is applied to data associated with the calendar entry in order to generate the displayed statistical information 221. As the user further zooms into the calendar application 12, further details about the activity and/or the statistical information 221 may be displayed.

In some situations, the displayed additional information may include one or more sub-activity progress bars 231 to 234. These progress bars 231 to 234 may be aligned in the calendar application with a start date and an end date of an activity associated with a respective calendar entry 23. A progress bar (shown in hatching) may show an overall completion amount of each activity. Progress bars of contingent activities 231 and 232 may be aligned on a same row. As the user further zooms into the calendar application 12, further details about the activity and/or the completion status of the progress bars 231 to 234 may be displayed.

Information displayed on screen may also be consolidated if the user zooms out of the calendar application 12. For example, in response to a user zooming out of the timeline, calendar entry information displayed on screen may be consolidated to display less information on the screen.

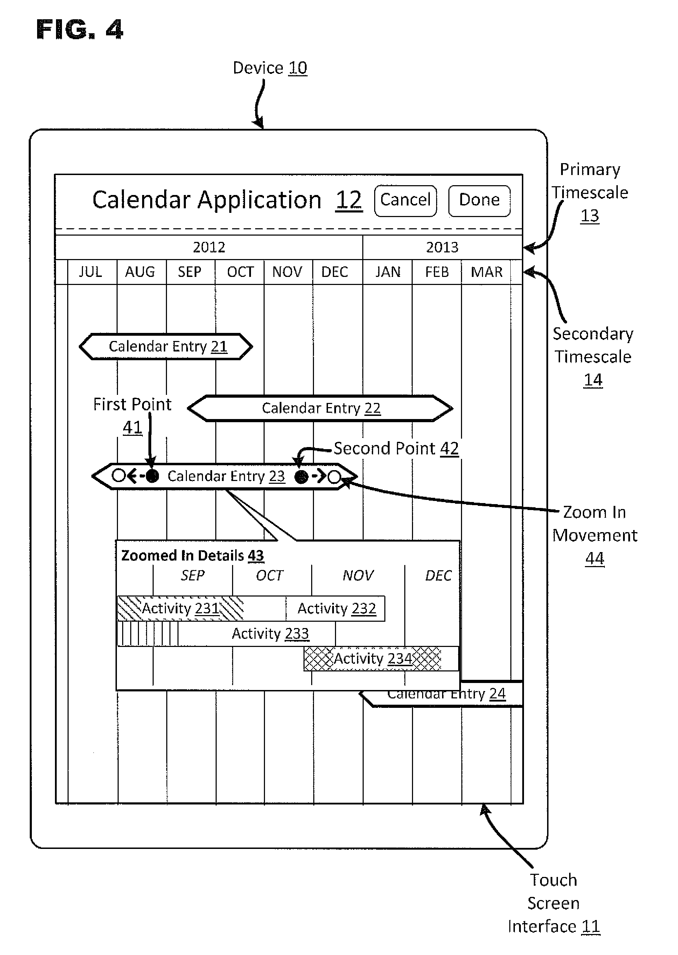

FIG. 4 shows exemplary additional information that may be displayed when a user zooms into a single calendar entry. A user may zoom into a single calendar entry by selecting a first 41 and a second 42 point contained within a single calendar entry, in this example calendar entry 23, and then moving 44 one or more of the points to zoom into the calendar entry.

In response to a user performing this zooming in movement 44 when the first and second points 41 and 42 are containing within a single calendar entry, additional information including sub-activities associated with the single calendar entry on the screen corresponding to a zoomed in time period may be displayed 43 when zooming into the single calendar entry.

The displayed additional information 43 may include a separate timeline displaying one or more sub-activity progress bars 231 to 234 associated with the calendar entry. These progress bars 231 to 234 may be aligned in the calendar application with a start date and an end date of an activity associated with a respective calendar entry 23. A progress bar (shown in hatching) may show an overall completion amount of each activity. Progress bars of contingent activities 231 and 232 may be aligned on a same row. As the user further zooms into the calendar entry or one of the progress bars, further details about the activity and/or the completion status of the progress bars 231 to 234 may be displayed.

Other information may be displayed in addition to or instead of the one or more progress bars 231 to 234. In one non-limiting example, the previously discussed sub-activity completion bar and/or the previously discussed statistical information may be displayed. The additional calendar entry information 43 displayed on the screen may be consolidated to display less information on the screen about the single calendar entry when zooming out of the single calendar entry.

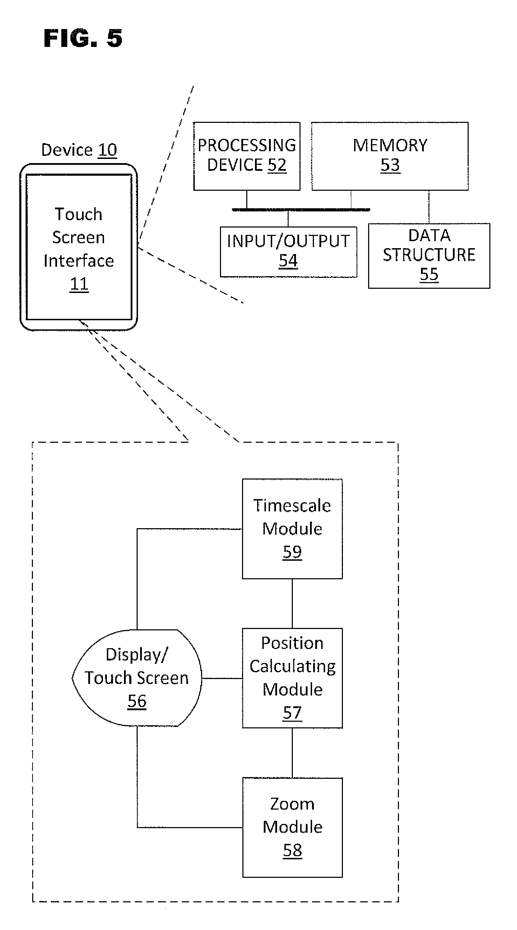

FIG. 5 shows an exemplary architecture. A device 10 may include a touch screen interface 11, processing device 52, memory 53, and communications interface 54. The touch screen interface 11 may include a display, which may be a touch screen, capable of displaying data to a user of the device 10. The touch screen interface 11 may include a position calculating module 57 coupled to a zoom module 58 and a timescale module 59, each of which may be coupled to a sensor of the touch sensitive screen 56. The sensor of the touch sensitive display screen 56 may be a capacitive touch detection sensor, configured to detect and track movement on the surface and/or in the vicinity of the display. The sensor may be coupled to a signal processing circuit that is configured to identify, locate, and/or track object movement based on the data obtained from sensor.

Memory 53 may include a computer readable medium storing application modules, which may include instructions associated with the module 57 to 59.

The position calculation module 57 may include functionality for identifying a touched first point and second point within a calendar application displaying a timeline across a first dimension on the touch screen device 10. The position calculation module 57 may also include functionality for calculating a change in a distance between the first point and the second point in response to a dragging of at least one of the touched points, scaling the calculated change in distance with a scaling factor that varies for different units of time in the calendar application, and dividing the scaled calculated change in distance by the width of the displayed timeline and by an adjustment factor to calculate a date change amount.

The zoom module 58 may include functionality for identifying whether the dragging corresponds to a zooming in or a zooming out based on the calculated distance change. The zoom module 58 may also include functionality for adjusting a start date and an end date of the displayed timeline by the calculated date change amount according to whether the dragging is identified as corresponding to the zooming in or the zooming out.

The timescale module 59 may include functionality for changing a timescale shown in the timeline displayed across the first dimension based on the adjusting of the start date and the end date.

The device 10 may contain a processing device 52, memory 53 storing loaded data or a loaded data structure 55, and a communications device 54, all of which may be interconnected via a system bus. In various embodiments, the device 10 may have an architecture with modular hardware and/or software systems that include additional and/or different systems communicating through one or more networks via communications device 84.

Communications device 54 may enable connectivity between the processing devices 52 in the device 10 and other systems by encoding data to be sent from the processing device 52 to another system over a network and decoding data received from another system over the network for the processing device 52.

In an embodiment, memory 53 may contain different components for retrieving, presenting, changing, and saving data and may include computer readable media. Memory 53 may include a variety of memory devices, for example, Dynamic Random Access Memory (DRAM), Static RAM (SRAM), flash memory, cache memory, and other memory devices. Additionally, for example, memory 53 and processing device(s) 52 may be distributed across several different computers that collectively comprise a system. Memory 53 may be capable of storing each user selected value from the displayed second list each time the second list is displayed.

In some instances, a cache in memory 53 may store calculated changes to the distance between the first point and the second point during the dragging of at least one of the points. The zoom module 58 may then adjust the start date and the end date of the calendar application only after a stored calculated change in the cache exceeds a threshold value.

Processing device 52 may perform computation and control functions of a system and comprises a suitable central processing unit (CPU). Processing device 52 may include a single integrated circuit, such as a microprocessing device, or may include any suitable number of integrated circuit devices and/or circuit boards working in cooperation to accomplish the functions of a processing device. Processing device 52 may execute computer programs, such as object-oriented computer programs, within memory 53. Processing device 52 may be capable of filtering data according to each stored user selected value associated with each respective selected first list characteristic.

The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, although the processing device 52 is shown as separate from the modules 57 to 59 and the touch screen interface 11, in some instances the processing device 52 and the touch screen interface 11 and/or one or more of the modules 57 to 59 may be functionally integrated to perform their respective functions.

Exemplary embodiments as described above may be summarized as follows:
Item 1. A computer-implemented method for adjusting a start date and an end date of a displayed timeline in a calendar application on a touch screen device comprising:
   identifying, using a processing device, a touched first point and second point within the calendar application displaying the timeline across a first dimension on the touch screen device;
   responsive to a dragging of at least one of the touched points, calculating a change in a distance between the first point and the second point;
   identifying whether the dragging corresponds to a zooming in or a zooming out based on the calculated distance change;
   scaling the calculated change in distance with a scaling factor that varies for different units of time in the calendar application;
   dividing the scaled calculated change in distance by the width of the displayed timeline and by an adjustment factor to calculate a date change amount; and
   adjusting the start date and the end date of the displayed timeline by the calculated date change amount according to whether the dragging is identified as corresponding to the zooming in or the zooming out.
Item 2. The computer-implemented method of Item 1, further comprising:
   changing a timescale shown in the timeline displayed across the first dimension based on the adjusting of the start date and the end date.
Item 3. The computer-implemented method of Item 2, further comprising:
   identifying a direction of the dragging;
   when the identified direction is vertical, changing a width of at Ieast one calendar entry displayed in the timeline; and
   when the identified direction is horizontal, adjusting the start date and the end date of the displayed timeline and changing the timescale shown in the timeline.
Item 4. The computer-implemented method of Item 1, wherein the dragging is identified as the zooming in when the calculated distance change between the touched points increases and the dragging is identified as the zooming out when the calculated distance change between the touched points decreases.
Item 5. The computer-implemented method of Item 1, wherein the dragging is identified as the zooming in when the calculated distance change between the touched points decreases and the dragging is identified as the zooming out when the calculated distance change between the touched points increases.
Item 6. The computer-implemented method of Item 1, further comprising: identifying a midpoint date displayed in the timeline that is associated with the touched points; and
   zooming the timeline around the identified midpoint date when zooming into or out of the timeline.
Item 7. The computer-implemented method of Item 1, further comprising: caching calculated changes to the distance between the first point and the second point as the user drags at least one of the points; and
   zooming into or out of the timeline only after the cached calculated change to the distance exceeds a threshold value.
Item 8. The computer-implemented method of Item 1, further comprising: responsive to the zooming into the timeline, displaying additional information associated with each calendar entry on the screen within the adjusted start date and the adjusted end date of the timeline; and
   responsive to the zooming out of the timeline, consolidating calendar entry information displayed on screen to display less information on the screen.
Item 9. The computer-implemented method of Item 1, wherein the displayed additional information includes at least one of a sub-activity completion status bar, statistical information of a respective calendar entry between the adjusted start date and the adjusted end date, and a sub-activity progress bar.
Item 10. The computer-implemented method of Item 2, wherein the timescales is a multidimensional timescale including a primary timescale and a secondary timescale having a unit of time that is a subset of the primary timescale.
Item 11. The computer-implemented method of Item 10, wherein the changing of the timescale shown in the timeline includes changing at least one of the primary timescale and the secondary timescale.
Item 12. The computer-implemented method of Item 11, wherein the primary timescale is selected from the group consisting of years, half-years, quarters, months, weeks, days, and the secondary timescale is a subset of the primary timescale..
Item 13. The computer-implemented method of Item 12, wherein the primary timescale is quarters and the secondary timescale is months and responsive to the zooming out of the calendar application, the primary timescale changes from quarters to years and the secondary timescale changes from months to quarters.
Item 14. The computer-implemented method of Item 12, wherein the secondary timescale continues to show months though the space allocated for each month on the screen is reduced.
Item 15. The computer-implemented method of Item 1, further comprising, responsive to the first point and the second point being contained within a single calendar entry on the display, performing at least one of:
   displaying additional information including sub-activities associated with the single calendar entry on the screen corresponding to a zoomed in time period when zooming into the single calendar entry; and
   consolidating calendar entry information displayed on the screen to display less information on the screen about the single calendar entry when zooming out of the single calendar entry.
Item 16. The computer-implemented method of Item 1, wherein one of a finger or an electronic device is used to touch the first point and the second point on the screen and drag the at least one point.
Item 17. A non-transitory computer readable medium comprising stored instructions that when executed by a processing device, cause the processing device to: identify a touched first point and second point within a calendar application displaying a timeline across a first dimension on a touch screen device;
   responsive to a dragging of at least one of the touched points, calculate a change in a distance between the first point and the second point;
   identify whether the dragging corresponds to a zooming in or a zooming out based on the calculated distance change;
   scale the calculated change in distance with a scaling factor that varies for different units of time in the calendar application;
   divide the scaled calculated change in distance by the width of the displayed timeline and by an adjustment factor to calculate a date change amount; and adjust a start date and an end date of the displayed timeline by the calculated date change amount according to whether the dragging is identified as corresponding to the zooming in or the zooming out.
Item 18. The non-transitory computer readable medium of Item 17, wherein the execution of the stored instructions further cause the processing device to change a timescale shown in the timeline displayed across the first dimension based on the adjusting of the start date and the end date.
Item 19. A system comprising:
   a touch sensitive screen;
   a position calculation module for identifying a touched first point and second point within a calendar application displaying a timeline across a first dimension on a touch screen device, responsive to a dragging of at least one of the touched points, calculating a change in a distance between the first point and the second point, scaling the calculated change in distance with a scaling factor that varies for different units of time in the calendar application, and dividing the scaled calculated change in distance by the width of the displayed timeline and by an adjustment factor to calculate a date change amount; and
   a zoom module for identifying whether the dragging corresponds to a zooming in or a zooming out based on the calculated distance change and adjusting a start date and an end date of the displayed timeline by the calculated date change amount according to whether the dragging is identified as corresponding to the zooming in or the zooming out; and
   a timescale module for changing a timescale shown in the timeline displayed across the first dimension based on the adjusting of the start date and the end date.
Item 20. The system of Item 19, further comprising a cache storing calculated changes to the distance between the first point and the second point during the dragging, wherein the zoom module adjusts the start date and the end date of the calendar application only after a stored calculated change in the cache exceeds a threshold value.

## Claims

1. A method for modifying data stored in a touch screen device and representative of a calendar, the method comprising:
detecting, within a calendar region displayed on a touch screen of said touch screen device by a calendar application executing on said touch screen device, a first point touched by a first user finger on a touch screen and a second point touched by a second user finger on said touch screen;
detecting a first dragging operation on said touch screen by said first and second user fingers relative to said first and second points;
detecting a third point touched by said first user finger on said touch screen at a conclusion of said first dragging operation and a fourth point touched by said second user finger on said touch screen at a conclusion of said first dragging operation;
storing, in said touch screen device, first touch point data indicative of a location of said first point on said touch screen, second touch point data indicative of a location of said second point on said touch screen, third touch point data indicative of a location of said third point on said touch screen and fourth touch point data indicative of a location of said fourth point on said touch screen;
calculating, using said first, second, third and fourth touch point data, a first distance between said first point and said second point and a second distance between said third point and said fourth point;
calculating a first scaling factor using said first distance, said second distance and one of a width of said calendar region and a width of said touch screen;
calculating a second scaling factor using said first scaling factor and first timescale data of said calendar application, said first timescale data being indicative of a timescale of a first timeline displayed on said touch screen by said calendar application at a time of said first dragging operation;
generating, using said second scaling factor and start time data of said calendar application indicative of a start time of said first timeline, first revised start time data;
generating, using said second scaling factor and end time data of said calendar application indicative of an end time of said first timeline, first revised end time data; and
refreshing said calendar region to display a first revised timeline that extends from a start time represented by said first revised start time data to an end time represented by said first revised end time data.

2. The method of claim 1, wherein:
a timescale of said first revised timeline differs from said timescale of said first timeline, and
said timescales are selected from the group of minutes, quarter hours, half hours, hours, days, weeks, months, quarter years, half years, years, decades and centuries.

3. The method of claim 1 or 2, comprising:
determining, using said first touch point data and said second touch point data, a midway point on said touch screen that is equidistant from said first point and said second point in a direction of said first timeline;
determining, as a midway time, a time on said first timeline corresponding to said midway point, wherein
said generating of said first revised start time data and said first revised end time data is effected such that said start time represented by said first revised start time data and said end time represented by said first revised end time data are equidistant from said midway time.

4. The method of any one of the preceding claims, wherein:
said generating of first revised start time data, said generating of first revised end time data and said refreshing are effected subject to the condition that the absolute value of a difference between said first distance and said second distance exceeds a threshold value stored in said touch screen device.

5. The method of any one of the preceding claims, comprising:
modifying, if said first distance is larger than said second distance, calendar event display data for each calendar event to be displayed in said refreshed calendar region such that calendar events displayed in said refreshed calendar region are displayed with less information than calendar events displayed in said calendar region at a time of said first dragging operation; and
modifying, if said second distance is larger than said first distance, calendar event display data for each calendar event to be displayed in said refreshed calendar region such that calendar events displayed in said refreshed calendar region are displayed with more information than calendar events displayed in said calendar region at a time of said first dragging operation.

6. The method of any one of the preceding claims, wherein:
at least one of said first timeline and said first revised timeline is displayed with a multidimensional timescale comprising a primary timescale and a secondary timescale having a unit of time that is a subset of said primary timescale.

7. The method of claim 6, wherein:
said first revised timeline differs from said first timeline with respect to at least one of said primary timescale and said secondary timescale.

8. The method of claim 6, wherein:
said primary timescale of said first revised timeline differs from said primary timescale of said first timeline, and
said secondary timescale of said first revised timeline is identical to said secondary timescale of said first timeline.

9. The method of any one of the preceding claims, comprising:
detecting, within said calendar region, a fifth point touched by said first user finger on said touch screen and a sixth point touched by said second user finger on said touch screen;
detecting a second dragging operation on said touch screen by said first and second user fingers relative to said fifth and sixth points;
detecting a seventh point touched by said first user finger on said touch screen at a conclusion of said second dragging operation and a eighth point touched by said second user finger on said touch screen at a conclusion of said second dragging operation;
storing, in said touch screen device, fifth touch point data indicative of a location of said fifth point on said touch screen, sixth touch point data indicative of a location of said sixth point on said touch screen, seventh touch point data indicative of a location of said seventh point on said touch screen and eighth touch point data indicative of a location of said eighth point on said touch screen;
determining, using said fifth, sixth, seventh and eighth touch point data, whether said second dragging operation is in a predominantly vertical direction or a predominantly horizontal direction;
calculating, using said fifth, sixth, seventh and eighth touch point data, a third distance between said fifth point and said sixth point and a fourth distance between said seventh point and said eighth point;
effecting, if said second dragging operation is in a predominantly vertical display direction of said touch screen, the steps of:
calculating a third scaling factor using said third distance, said fourth distance and one of a height of said calendar region and a height of said touch screen; and
altering, with respect to a first calendar event displayed in said calendar region, at least one of start time data and end time data indicative of a start / end time of said event using said third distance; and
effecting, if said second dragging operation is in a predominantly horizontal display direction of said touch screen, the steps of:
calculating a fourth scaling factor using said third distance, said fourth distance and one of a width of said calendar region and a width of said touch screen;
calculating a fifth scaling factor using said fourth scaling factor and second timescale data of said calendar application, said second timescale data being indicative of a timescale of a second timeline displayed on said touch screen by said calendar application at a time of said second dragging operation;
generating, using said fifth scaling factor and start time data of said calendar application indicative of a start time of said second timeline, second revised start time data;
generating, using said second scaling factor and end time data of said calendar application indicative of an end time of said second timeline, second revised end time data; and
refreshing said calendar region to display a second revised timeline that extends from a start time represented by said second revised start time data to an end time represented by said second revised end time data.

10. The method of any one of the preceding claims, comprising:
detecting, within a second calendar event displayed in said calendar region, a ninth point touched by said first user finger on said touch screen and a tenth point touched by said second user finger on said touch screen;
detecting a third dragging operation on said touch screen by said first and second user fingers relative to said ninth and tenth points;
detecting a eleventh point touched by said first user finger on said touch screen at a conclusion of said third dragging operation and a twelfth point touched by said second user finger on said touch screen at a conclusion of said third dragging operation;
storing, in said touch screen device, ninth touch point data indicative of a location of said ninth point on said touch screen, tenth touch point data indicative of a location of said tenth point on said touch screen, eleventh touch point data indicative of a location of said eleventh point on said touch screen and twelfth touch point data indicative of a location of said twelfth point on said touch screen;
calculating, using said ninth, tenth, eleventh and twelfth touch point data, a fifth distance between said ninth point and said tenth point and a sixth distance between said eleventh point and said twelfth point;
modifying, if said sixth distance is larger than said fifth distance, calendar event display data for said second calendar event such that said second calendar event is displayed with more information than before said third dragging operation; and
modifying, if said fifth distance is larger than said sixth distance, calendar event display data for said second calendar event such that said second calendar event is displayed with less information than before said third dragging operation.

11. The method of claim 5 or 10, wherein:
said more information comprises at least one of a completion status bar, a sub-activity completion status bar, statistical information, a progress bar and a sub-activity progress bar.

12. A non-transitory computer readable storage medium comprising instructions that, when executed by a processing device, cause the processing device to effect the method of any one of the preceding claims.

13. A touch screen device comprising:
a touch screen;
a touch screen driver comprising a data buffer, said touch screen driver driving said touch screen to display images on said touch screen using data stored in said data buffer;
data storage for storing instructions representative of a calendar application;
a processor for executing said instructions; and
a touch detection module for detecting, within a calendar region displayed on said touch screen by said calendar application, a first point touched by a first user finger on a touch screen and a second point touched by a second user finger on said touch screen, for detecting a first dragging operation on said touch screen by said first and second user fingers relative to said first and second points, for detecting a third point touched by said first user finger on said touch screen at a conclusion of said first dragging operation and a fourth point touched by said second user finger on said touch screen at a conclusion of said first dragging operation, and for generating first touch point data indicative of a location of said first point on said touch screen, second touch point data indicative of a location of said second point on said touch screen, third touch point data indicative of a location of said third point on said touch screen and fourth touch point data indicative of a location of said fourth point on said touch screen, wherein
said processor:
calculates, using said first, second, third and fourth touch point data, a first distance between said first point and said second point and a second distance between said third point and said fourth point;
calculates a first scaling factor using said first distance, said second distance and one of a width of said calendar region and a width of said touch screen;
calculates a second scaling factor using said first scaling factor and first timescale data of said calendar application, said first timescale data being indicative of a timescale of a first timeline displayed on said touch screen by said calendar application at a time of said first dragging operation;
generates, using said second scaling factor and start time data of said calendar application indicative of a start time of said first timeline, first revised start time data;
generates, using said second scaling factor and end time data of said calendar application indicative of an end time of said first timeline, first revised end time data; and
communicates data and instructions to said touch screen driver that effect a refresh of said calendar region to display a first revised timeline that extends from a start time represented by said first revised start time data to an end time represented by said first revised end time data.

14. The device of claim 13, wherein:
a timescale of said first revised timeline differs from said timescale of said first timeline, and
said timescales are selected from the group of minutes, quarter hours, half hours, hours, days, weeks, months, quarter years, half years, years, decades and centuries.

15. The method of claim 13 or 14, wherein:
said generating of first revised start time data, said generating of first revised end time data and said communicating of data and instructions are effected subject to the condition that the absolute value of a difference between said first distance and said second distance exceeds a threshold value stored in said data storage.
